# EUROPEAN PATENT APPLICATION

(11) **EP 1 775 196 A2**
(43) Date of publication of application: **18.04.2007**
(21) Application number: 06118501.3
(22) Date of filing: 07.08.2006
(51) Int. Cl.: B62D 5/04

(54) **Steering assembly for work vehicles, particularly lift trucks, tractors, trailers and/or the like**

(30) Priority: 11.10.2005 IT MO20050258
(71) Applicant: Borghi, Ivan, 41030 Villavara di Bomporto MO (IT)
(72) Inventor: Borghi, Ivan, 41030 Villavara di Bomporto MO (IT)
(74) Representative: Modiano, Micaela Nadia

(57) **Abstract**

A steering assembly (1) for work vehicles, particularly lift trucks, tractors, trailers and/or the like, comprising a body (4) for coupling to a work vehicle provided with means (5) for rotation about a vertical axis (A) of a wheel hub supporting element (3), motor means (6) of the electric type associated with the coupling body (4) for turning a motor shaft, and rotary motion transmission means (8) interposed between the motor shaft (7) and the supporting element (3).

## Description

The present invention relates to a steering assembly for work vehicles, particularly lift trucks, tractors, trailers and/or the like.

It is known that work vehicles such as lift trucks, small tractors and others, provided with three or four wheels, have particular steering assemblies which are actuated hydromechanically and are used to turn, through predefined angles and in predefined times, the hub supporting shafts of one or more steerable wheels.

These steering assemblies comprise a box-like body, which is generally cylindrical and accommodates a plurality of toothed couplings arranged in succession, which are constituted substantially by coaxial and mutually interacting gears designed to convert the reciprocating rectilinear motion of one or more pistons, produced by the action of a pressurized fluid, into a rotary motion of the hub supporting shaft.

Steering assemblies are also known which are constituted by a pinion which is keyed to the hub supporting shaft and is coupled to a rack, the axial movements of which are determined by two hydraulic cylinders associated respectively with its opposite ends.

Another type of steering assembly consists of a hydraulic jack, the piston of which is provided with transverse pins engaged slidingly within helical slots provided on the outer surface of a cylinder; the translational motion of the piston and of the pins rigidly coupled thereto makes the cylinder rotate about its own axis and turn the hub supporting shaft mounted on said cylinder.

These known types of steering assembly are not free from drawbacks, including the fact that they have a complex structure which is complicated to manufacture and usually requires the execution of accurate machining during production and laborious assembly operations.

In this regard, it is stressed that the considerable constructive complexity is at least partly due to the presence of the hydraulic circuits for supplying the actuation cylinders and to the difficulty in sizing these circuits correctly as a function of the power they deliver.

Moreover, traditional steering assemblies are not always able to ensure precise and sensitive adjustment of steering during use.

Besides, one cannot ignore that the use of hydraulic actuators often entails the presence of small or large quantities of oily substances on the outside of the steering assemblies, due to leaks caused by seepage or malfunctions and faults; for this reason, traditional steering assemblies are not particularly adapted for uses in spaces where considerable cleanliness and asepsis are required, such as for example white rooms, clinics, hospitals, et cetera.

The aim of the present invention is to eliminate the above-mentioned drawbacks of the background art, by providing a steering assembly for work vehicles, particularly lift trucks, tractors, trailers and/or the like, which is constructively particularly simple, practical to provide and compact, and can be modified easily according to the performance to be obtained and can be used even in very clean environments.

Within this aim, an object of the present invention is to provide a steering assembly which is simple, relatively easy to provide in practice, safe in use and effective in operation.

This aim and this and other objects that will become better apparent hereinafter are achieved by the present steering assembly for work vehicles, particularly lift trucks, tractors, trailers and/or the like, which comprises a body for coupling to a work vehicle provided with means for rotation about a substantially vertical axis of at least one wheel hub supporting element, motor means for turning a motor shaft which can be associated with said coupling body and rotary motion transmission means which are interposed substantially between said motor shaft and said supporting element, characterized in that said motor means are of the electrical type.

Further characteristics and advantages of the present invention will become better apparent from the following detailed description of some preferred but not exclusive embodiments of a steering assembly for work vehicles, particularly lift trucks, tractors, trailers and/or the like, illustrated by way of non-limiting example in the accompanying drawings, wherein:
Figure 1 is a partially sectional side view of a first embodiment of the steering assembly according to the invention;
Figure 2 is a partially sectional side view of a second embodiment of the steering assembly according to the invention;
Figure 3 is a partially sectional plan view of the steering assembly of Figure 2;
Figure 4 is a partially sectional plan view of the steering assembly of Figure 2 in a steering configuration.

With reference to the figures, the reference numeral 1 generally designates a steering assembly for work vehicles, particularly lift trucks, tractors, trailers and/or the like.

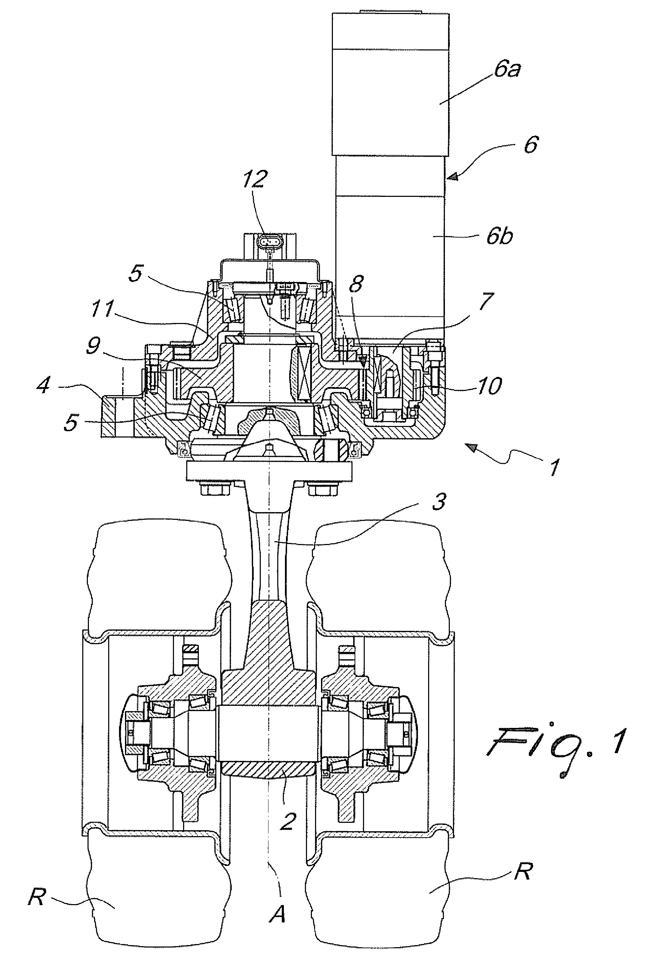

In the embodiment of the invention shown in Figure 1, the steering assembly 1 is used to steer a pair of wheels R mounted on opposite sides of a hub 2, which is associated centrally with a substantially vertical supporting element 3.

In particular, the steering assembly 1 comprises a body 4 for coupling to the work vehicle, which is provided with means 5 for turning the supporting element 3 about a vertical axis A.

Motor means 6 for turning a motor shaft 7 are mounted on the coupling body 4; said motor shaft is associated with the supporting element 3 by way of the interposition of rotary motion transmission means 8.

The motor means 6 of the steering assembly 1 are of the electrical type and comprise a gearmotor constituted by a main motor 6a and by an output reduction unit 6b, from which the motor shaft 7 protrudes.

The transmission means 8 comprise at least one reduction assembly provided with at least one portion of a gear 9, which is keyed to the supporting element 3, and at least one toothed pinion 10, which meshes with the gear 9 and can be keyed to the motor shaft 7.

The reduction assembly is contained in at least one box-like body 11, which is associated with the coupling body 4 and inside which there are two conical roller bearings, which constitute the rotation means 5.

Means for detecting the breadth of the rotation of the supporting element 3 about the vertical axis A are provided at the upper end of the supporting element 3; said means are of the electronic type and are constituted for example by a potentiometer 12.

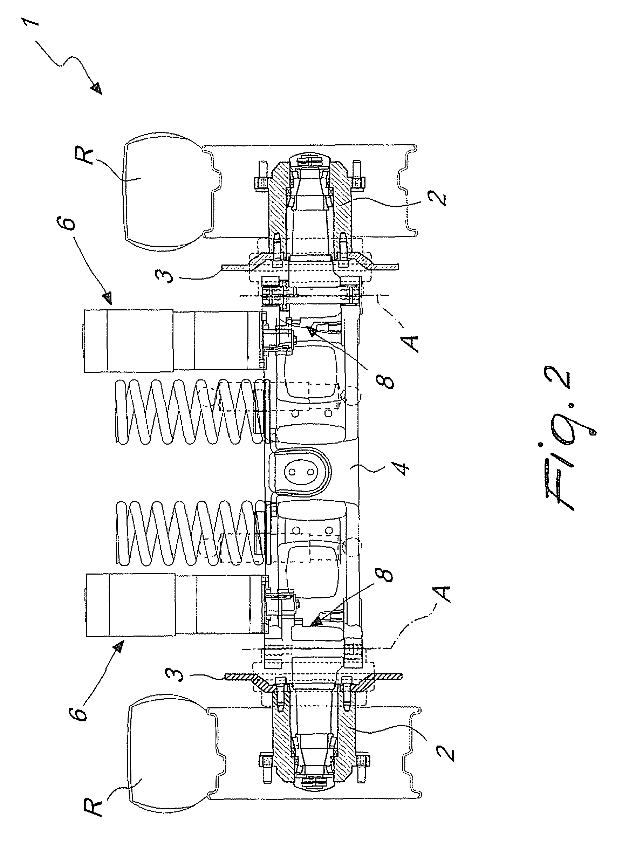

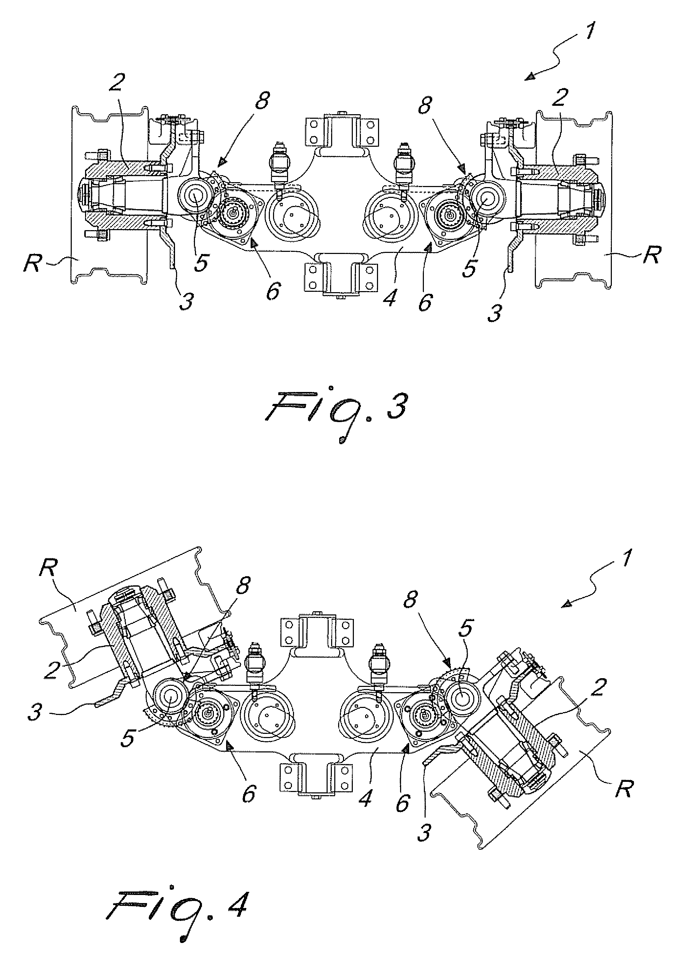

Finally, Figures 2, 3 and 4 illustrate, purely by way of example, a possible embodiment of the present invention applied to an axle for supporting two mutually opposite steerable wheels, such as those fitted on work vehicles with four or more wheels.

In practice it has been found that the described invention achieves the intended aim and objects.

In particular, the refinement of using motor means of the electrical type in fact allows to simplify considerably the structural architecture of the steering assembly, reduce the overall dimensions, increase the performance in terms of steering precision, and avoid the use of oil or other fluids, which might dirty the surrounding environment in case of leaks.

By means of a simple and quick replacement of the electric motor means with other more or less powerful ones, moreover, the present invention can be adapted easily to steer wheels having different weights and dimensions.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Patent Application No. M02005A000258 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A steering assembly (1) for work vehicles, particularly lift trucks, tractors, trailers and/or the like, comprising a body (4) for coupling to a work vehicle provided with means (5) for rotation about a substantially vertical axis (A) of at least one wheel hub supporting element (3), motor means (6) for turning a motor shaft (7) which can be associated with said coupling body (4) and rotary motion transmission means (8) which are interposed substantially between said motor shaft (7) and said supporting element (3), **characterized in that** said motor means (6) are of the electrical type.

2. The assembly according to claim 1, **characterized in that** said transmission means (8) comprise at least one reduction assembly, which is provided with at least one portion of a gear (9) which is keyed on said supporting element (3) and with at least one toothed pinion (10), which can be associated with said motor shaft and meshes with said gear portion.

3. The assembly according to one or more of the preceding claims, **characterized in that** said transmission means (8) comprise at least one box-like body (11) for containing said reduction assembly.

4. The assembly according to one or more of the preceding claims, **characterized in that** said pinion (10) is keyed to said motor shaft.

5. The assembly according to one or more of the preceding claims, **characterized in that** said motor means (6) comprise a gearmotor.

6. The assembly according to one or more of the preceding claims, **characterized in that** said rotation means (5) comprise at least one bearing of the conical roller type inserted in said box-like body (11).

7. The assembly according to one or more of the preceding claims, **characterized in that** it comprises means (12) for detecting the breadth of the rotation of said supporting element (3) about said axis (A).

8. The assembly according to one or more of the preceding claims, **characterized in that** said detection means (12) are arranged at the upper end of said supporting element (3).

9. The assembly according to one or more of the preceding claims, **characterized in that** said detection means (12) are of the electronic type.

10. The assembly according to one or more of the preceding claims, **characterized in that** said detection means (12) comprise at least one potentiometer.
